Europäisches Patentamt

European Patent Office

Office européen des brevets

(19)

(11) Veröffentlichungsnummer: **0 075 035**
**A1**

(12) # EUROPÄISCHE PATENTANMELDUNG

(21) Anmeldenummer: **81107440.0**

(22) Anmeldetag: **19.09.81**

(51) Int. Cl.³: **B 60 T 1/10**

(43) Veröffentlichungstag der Anmeldung: **30.03.83**
Patentblatt **83/13**

(84) Benannte Vertragsstaaten: **AT BE CH DE FR GB IT LI LU NL SE**

(71) Anmelder: **Kappmeier, Uwe H., Ing.-grad., König-Ludwig-Strasse 40, D-4350 Recklinghausen-Süd (DE)**

(72) Erfinder: **Kappmeier, Uwe H., Ing.-grad., König-Ludwig-Strasse 40, D-4350 Recklinghausen-Süd (DE)**

(74) Vertreter: **Herrmann-Trentepohl, Werner, Dipl.-Ing. et al, Schaeferstrasse 18, D-4690 Herne 1 (DE)**

(54) **Triebwerk, insbesondere für Kraftfahrzeuge.**

(57) Bei einem Triebwerk, insbesondere für Kraftfahrzeuge, welche einen vorzugsweise mit einem Getriebe versehenen Antrieb, in dem der Motor mit einer Drehzahlsteuerung- bzw. -regelung versehen ist und eine Betriebsbremse aufweist, die vorzugsweise auf die von dem Triebwerk angetriebenen Massen wirkt, wird Bremsenergie in für den Antrieb der Maschine bzw. des Kraftfahrzeuges nutzbare Energie mit dem Ziel einer Erhöhung des Gesamtwirkungsgrades und/oder der Erzielung zusätzlicher Beschleunigungsenergie und einer zusätzlichen Bremswirkung umgesetzt durch einen hydrostatischen Hilfsantrieb mit einem auf Pumpen umschaltbaren hydraulischen Motor (8), einem Druckspeicher (9), auf den die Pumpe (8) arbeitet und der den hydraulischen Motor (8) speist und einer hydraulischen Schaltung (51), welche die Pumpe bzw. den Motor (8) mit dem Druckspeicher (9) verbindet, ein Verbindungsgetriebe (6) von dem hydrostatischen Hilfsantrieb zum Maschinentriebwerk, sowie eine Steuerung (54), die die Betriebsbremse (19) und die Drehzahlsteuerung- bzw. -regelung (23) des Maschinenantriebes (1, 2) mit der Pumpenumschaltung (15) der hydraulischen Schaltung (51) verbindet.

ACTORUM AG

**Dipl.-Phys. Eduard Betzler**

**Dipl.-Ing. W. Herrmann-Trentepohl**

PATENTANWÄLTE

Professional representatives
to the European Patent Office.

**8000 München 40,**
Eisenacher Straße 17
**Pat.-Anw. Betzler**
Fernsprecher: 089 / 36 30 11
36 30 12
36 30 13

Telegrammanschrift:
Babetzpat München
Telex 5 215 360

**4690 Herne 1,**
Schaeferstraße 18
Postfach 1140.
**Pat.-Anw. Herrmann-Trentepohl**
Fernsprecher: 0 23 23 / 5 10 13
5 10 14

Telegrammanschrift:
Bahrpatente Herne
Telex 08 229 853

Ref.: A 30 805 X/Wd
in der Antwort bitte angeben

Zuschrift bitte nach:

H e r n e   1

18.September 1981

Ing.grad. Uwe H. Kappmeier, König-Ludwig-Str. 40,
4350 Recklinghausen-Süd, Bundesrepublik Deutschland

"Triebwerk, insbesondere für Kraftfahrzeuge"

Die Erfindung betrifft ein Triebwerk, insbesondere für Kraftfahrzeuge, welches einen vorzugsweise mit einem Getriebe versehenen Antrieb, in dem der Motor mit einer Drehzahlsteuerung-bzw.-regelung versehen ist, und eine Betriebsbremse aufweist, die vorzugsweise auf die von dem Triebwerk angetriebenen Massen wirkt.

Die Erfindung bezieht sich auf den treibenden Teil einer Maschine, der aus mehreren und in ihrer Mehrzahl vorzugsweise mechanisch ausgebildeten Teilen besteht. Das bevorzugte Anwendungsgebiet der Erfindung ist das der Kraftfahrzeugtriebwerke, welche in der Regel eine Brennkraftmaschine als Motor, der auf ein Schaltgetriebe

- 2 -

wirkt, eine Kardanwelle, eine oder mehrere Differentiale und die Verbindungselemente zu den angetriebenen Massen aufweisen. Die Erfindung bezweckt, die Verzögerungsenergie der von dem Triebwerk beschleunigten Massen der Maschine für deren Antrieb zu nutzen. Wird z.B. ein Kraftfahrzeug abgebremst, so wird die lebendige Energie der gebremsten Massen letztlich in Wärme umgesetzt, die abgeführt werden muß und daher verlorengeht.

Es sind allerdings Elektroantriebe, z.B. für Bahnen bzw. Elektrolokomotiven bekannt, welche es ermöglichen, die von dem beim Bremsen angetriebenen und dann als Dynamo wirkenden Motor aufgenommene Bewegungsenergie in das elektrische Netz zurückzuspeisen. Solche Antriebe bzw. Triebwerke bieten jedoch in der Regel nicht die Möglichkeit der Gewinnung zusätzlicher Beschleunigungsenergie. Sie sind auf die elektrische Energie beschränkt und in aller Regel unverhältnismäßig teuer, so daß sie nur für bestimmte Anwendungen infrage kommen.

Der Erfindung liegt dagegen die Aufgabe zugrunde, den Umsatz von      Bremsenergie in für den Antrieb der Maschine, insbesondere eines Kraftfahrzeuges nutzbare Antriebsenergie bei einem Triebwerk der eingangs bezeichneten Art zu ermöglichen, um den Gesamtwirkungsgrad zu erhöhen und/oder zusätzliche Beschleunigungsenergie und eine zusätzliche Bremswirkung zu gewinnen.

Gemäß der Erfindung wird diese Aufgabe gelöst durch einen hydrostatischen Hilfsantrieb mit einem auf Pumpen umschaltbaren hydraulischen Motor, einem Druckspeicher, auf den die Pumpe arbeitet und der den hydraulischen Motor speist und einer hydraulischen Schaltung, welche die Pumpe bzw. den Motor mit dem Druckspeicher verbindet, einem Verbindungsgetriebe von dem hydrostatischen Hilfsantrieb zum Maschinentriebwerk, einer lösbaren Kupplung zwischen dem Maschinenhauptantrieb und dem Verbindungsgetriebe, sowie einer Steuerung, die die Betriebsbremse und die Drehzahlsteuerung - bzw.-regelung des Maschinenhauptantriebes mit der Pumpenumschaltung und der hydraulischen Schaltung des Hilfsantriebes verbindet.

Der hydraulische Hilfsantrieb ist im Gegensatz zu dem beim Bremsen abgekuppelten Hauptantrieb der Maschine über das Verbindungsgetriebe auf das Triebwerk geschaltet und wirkt daher beim Bremsen als Pumpe, welche über das Triebwerk von der lebendigen Energie der Maschinenmassen angetrieben ist und diese Energie in den Speicher abgibt. Moderne hydraulische Druckspeicher, insbesondere Gasdruckspeicher, können auf diese Weise erzeugte erhebliche Energien als Druckpotential aufnehmen. Infolge der Verbindung des hydrostatischen Hilfsantriebes durch die Steuerung mit der Betriebsbremse und der Drehzahlsteuerung- bzw. -regelung des Maschinenhauptantriebes läßt sich das Triebwerk so einrichten, daß die Pumpe die Betriebsbremse unterstützt, solange der Bremsvorgang dauert und erst dann umgeschaltet wird, wenn die Drehzahlsteuerung- bzw. -regelung auf Beschleunigung des Hauptantriebes gestellt ist. Diese Umsteuerung der Pumpe setzt das von dem Bremsvorgang herrührende und im Druckspeicher vorhandene Druckpotential in Bewegungsenergie um, welche über das Verbindungsgetriebe an das Triebwerk abgegeben wird. Das kann bei eingerückter Kupplung erfolgen, so daß der Hauptantrieb entlastet bzw. die Maschine zusätzlich beschleunigt wird. Man kann diese Kupplung automatisieren, indem man einen Freilauf einbaut oder eine Turbokupplung verwendet.

Die Erfindung erlaubt die Energiegewinnung aus bislang verlorener Bremsenergie und ist daher geeignet, den Betrieb von Maschinen, deren Massen häufig abgebremst und wiederbeschleunigt werden müssen, was insbesondere bei Kraftfahrzeugen der Fall ist, rationell zu gestalten. Triebwerke dieser Art lassen sich verhältnismäßig einfach mit den erfindungsgemäß vorgesehenen Baugruppen versehen, wobei man in vielen Fällen auch einen nachträglichen Einbau wird vornehmen können.

Vorzugsweise und gemäß einem weiteren Merkmal der Erfindung weist die hydraulische Schaltung eine die Pumpe mit dem Druckspeicher verbindende Hoch-, eine die Pumpe speisende Niederdruckseite und eine ein Wegeventil aufweisende Verbindungsleitung auf, in der ein Rückschlagventil und eine Drossel in Richtung abnehmenden Druckes hintereinandergeschaltet sind, wobei das Wegeventil bei eingeschalteter Zündung geschlossen ist. Durch diese Zweigleitung läßt sich der Druckspeicher entlasten, wenn die Maschine für längere Zeit stillgesetzt wird.

Die Gefahr des Überfüllens des Druckspeichers läßt sich in der hydraulischen Schaltung verhindern, die erfindungsgemäß in parallelen, die Hoch- und die Niederdruckseite verbindenden Zweigen ein Druckbegrenzungsventil und eine hydraulisch entsperrbare Rückschlagsicherung aufweist.

Gemäß einem anderen Merkmal der Erfindung weist die Steuerung einen hydraulischen Zweig auf, in dem ein mit der Betriebsbremse gesteuerter Hauptdruckerzeuger, eine von der Drehzahlsteuerung- bzw. -regelung gesteuerter Hilfsdruck erzeugt wird, der den Hauptdruckerzeuger gegensteuert und wenigstens ein Stellmotor für die Pumpensteuerung angeordnet sind. Auf diese Weise macht man die Pumpenumsteuerung von der Bremse und von der Drehzahl abhängig und verhindert auf hydraulischem Wege, daß der Hauptantrieb bei angezogener Betriebsbremse beschleunigt werden kann.

Gemäß einer bevorzugten Ausführungsform der Erfindung weist die Steuerung einen elektrischen Zweig auf, in dem ein mit einem Drehzahlregler steuerbarer Schalter sowie ein elektrisch steuerbares Rückschlagventil angeordnet sind, das in eine Verbindungsleitung der hydraulischen Schaltung eingebaut ist. Hierdurch ist es möglich, bei Beschleunigung des Hauptantriebes das Rückschlagventil zu entsperren, das dann den Abfluß für die als Motor wirkende Pumpe freigibt. Andererseits kann man das Rückschlagventil auch sperren und dadurch den Abfluß aus dem Druckspeicher verhindern, wenn die Stellung der Drehzahlsteuerung- bzw.-regelung entsprechend eingestellt ist.

Die Einzelheiten, weiteren Merkmale und andere Vorteile der Erfindung ergeben sich aus der nachfolgenden Beschreibung einer Ausführungsform anhand der Schaltskizze, welche die Anwendung der Erfindung auf das Triebwerk eines Kraftfahrzeuges wiedergibt.

Der Hauptantrieb des Kraftfahrzeuges besteht wie üblich aus einer Brennkraftmaschine 1 und einem Getriebe 2. Die Abtriebswelle des Getriebes ist über einen Freilauf 3 an eine Kardanwelle 4 gekuppelt. Zwischen Freilauf 3 und Differential 5 ist ein Verbindungsgetriebe 6 vorgesehen, welches gemäß dem dargestellten Ausführungsbeispiel aus einem Kettentrieb besteht, welcher auf ein mit der Kardanwelle 4 verkeiltes Ritzel wirkt und von einem Zahnrad angetrieben wird, das am Ende der Antriebswelle 7 eines hydrostatischen Hilfsantriebes 8 befestigt ist. Statt eines Kettentriebes läßt sich auch ein Riemen- oder Rädergetriebe einsetzen.

Der hydrostatische Hilfsantrieb weist eine umschaltbare Pumpe 8 auf, die auch als Motor wirken kann und dann die Welle 7 in der angegebenen Drehrichtung antreibt. Die Pumpe liegt in der die Hochdruckseite 50 bildenden hydraulischen Schaltung, die allgemein mit 51 bezeichnet ist. Die Hochdruckseite enthält außerdem einen hydraulischen Speicher 9, der nur schematisch wiedergegeben ist. Er besitzt im wesentlichen einen von einer Feder unterstützten Kolben, der auf der gegenüberliegenden Seite mit Drucköl der Hochdruckseite 50 beaufschlagt wird. Dieser Druck läßt sich an einem Manometer 52 ablesen. Von der Hochdruckseite 50 zweigt eine Leitung 34 mit einem Entlüftungsventil ab. Außerdem ist zwischen Pumpe 8 und Druckspeicher 9 ein Filter 30 eingebaut, welches über Rückschlagventile 38 gegen falsche Durchflußrichtung abgesichert ist.

Die Niederdruckseite 53 ist ihrerseits mit einer Entlüftung 34 versehen und endet an einem Ausgleichsgefäß 33, das über ein Ventil 35 entleert werden kann.

26

0075035

Eine allgemein mit 54 bezeichnete Steuerung hat einen durch eine dünne Linienführung gekennzeichneten elektrischen Zweig 55 und den nachstehend beschriebenen hydraulischen Zweig 56. Der hydraulische Zweig 56 weist den Hauptdruckerzeuger 57 auf, welcher gemäß dem dargestellten Ausführungsbeispiel von zwei voneinander unabhängigen Kolben 16, 17 gebildet wird. Der Kolben 16 wirkt über eine Leitung 58 mit einem Hilfsdruckerzeuger 24 zusammen. Der von dem Hilfsdruckerzeuger 24 kommende Druck wirkt über die Kolbenstange des Hilfskolbens 16 auf den Hauptkolben 17 des Hauptdruckerzeugers 57. Der Hilfsdruckerzeuger 24 ist mit dem Gaspedal 23 verbunden, das als Drehzahlsteuerung- bzw. -regelung der Brennkraftmaschine 1 dient, die den Hauptantrieb bildet. Das Bremspedal ist mit einer Rückstellfeder 26 versehen und wirkt mit einer Druckfeder 25 zusammen. Das Gaspedal betätigt das Gestänge 28, das seinerseits eine Rückholfeder 27 aufweist. Über einen Schließer 32 ist der elektrische Zweig 55 mit dem hydraulischen Zweig 58 der Steuerung 54 über das Gaspedal 23 verbunden.

Das Bremspedal 19 betätigt über einen Bremszylinder 18 eine Betriebsbremse, die im einzelnen nicht dargestellt ist. Der Hauptbremszylinder 18 wirkt mit einer Rückholfeder 22 zusammen, während das Bremspedal eine Rückstellfeder 21 aufweist. Eine Druckfeder 20 wirkt ihrerseits auf das Pedalgestänge.

Der vom Hauptdruckerzeuger 57 kommende Ölstromt dient zur Beaufschlagung eines Steuerzylinders 15. Die Pumpe kann von Minus über Null nach Plus bzw. umgekehrt umsteuert werden. In der Stellung O läuft die Pumpe leer. In der Stellung Plus fördert sie in den Speicher, in der Stellung Minus wirkt sie als Hydromotor.

0075035

Im folgenden werden einige Betriebszustände erläutert:

I

Starten und Anfahren

Eine Leitung 46 der elektrischen Steuerung 54 führt vom Zündschloß der Brennkraftmaschine zu einem Wegeventil 10, das in eine Leitung 47 eingebaut ist, die die Hochdruckseite 50 mit der Niederdruckseite 53 der hydraulischen Schaltung verbindet. Im gleichen Zweig liegt das Rückschlagventil 11 und die Drossel 39.

Zu Beginn ist das Zündschloß ausgeschaltet, wodurch das Wegeventil 10 gemäß der Schaltskizze auf Druchgang gestellt ist. Daher herrscht in beiden Zweigen 50 und 53 der hydraulischen Schaltung 51 der gleiche Druck.

Sobald die Zündung der Brennkraftmaschine 1 eingeschaltet wird, wird über den Zweig 46 das Wegeventil 10 umgeschaltet, wodurch der Zweig 47 abgeschlossen wird. Die Brennkraftmaschine 1 wird wie bekannt angelassen. Sie treibt über das Getriebe 2, die geschlossene Kupplung 3, die als Freilauf oder als hydrodynamische Kupplung ausgebildet ist, die Kardanwelle 4 und das Differential 5 die Antriebsräder des Fahrzeuges an. Damit fährt das Fahrzeug an und kann auf eine beliebige Geschwindigkeit gebracht werden.

## II
## Leichte Verzögerung

Sobald eine leichte Verminderung der Geschwindigkeit vorgenommen werden soll, muß gebremst werden, weil infolge der dann gelösten Kupplung 3 durch Gas wegnehmen die Brennkraftmaschine nicht zur Verzögerung eingesetzt werden kann. Auch die hydraulische Pumpe 8 wird über das Verbindungsgetriebe 6 und die Welle 7 lediglich mitgenommen. Deswegen muß zur Verzögerung des Fahrzeuges die Betriebsbremse bzw. die Pumpe 8 eingesetzt werden. Zu diesem Zweck wird das Bremspedal 19 betätigt. Dadurch wird die Stange des Kolbens 17 des Hauptdruckerzeugers 57 verstellt. Der Kolben drückt Drucköl in den Steuerzylinder 15, welcher dadurch die Pumpe 8 umsteuert, d.h. von Null auf Plus stellt. Gleichzeitig wird aber über den Kolben 17 der Kolben 16 ausgelenkt, wodurch der Stellzylinder 24 beaufschlagt ist. Der in ihm befindliche Hilfsdruckerzeuger kann jedoch das Gaspedal nicht auslenken, weil der Druck mit der Druckfeder 25 ausgeglichen ist.

Durch die Umsteuerung mit Hilfe des Zylinders 15 beginnt die Pumpe 8 Öl aus der Niederdruckseite 53 zu fördern, wobei das Rückschlagventil 29 überwunden wird und Drucköl in den Speicher 9 gelangt, weil das Wegeventil 10 den Abfluß in die Niederdruckseite verhindert. Die benötigte Energie wird über das Verbindungsgetriebe 6 und die Welle 7 von den bewegten Massen des Fahrzeuges an die Pumpe 8 abgegeben. Das wirkt sich in einer Abbremsung des Fahrzeuges aus.

Die Stellung des Bremspedals 19 bestimmt die Größe der Verzögerung.

0075035

Wenn der Bremsvorgang beendet werden soll, wird das Bremspedal 19 vom Druck entlastet. Dadurch kann die Rückstellfeder 21 das Bremspedal 19 gegen den Anschlag 36 führen, was die Ausgangsstellung des Pedals definiert. Gleichzeitig wird der Hauptdruckerzeuger 57 zurückgenommen, der demzufolge den Stellzylinder 15 umgekehrt beaufschlagt, wodurch die Pumpe auf Null gestellt wird.

Der Hilfskolben 16 wird hierbei nicht betätigt, weil seine Kolbenstange nicht mit dem Kolben 17 verbunden ist.

In der nunmehr erreichten Einstellung des Triebwerkes wird keine Energie entnommen. Das Rückschlagventil 29 verhindert jedoch den Rückfluß aus dem Speicher 9, der sich demzufolge nicht entspannen kann. Das Fahrzeug rollt ohne Bremse unbeeinflußt weiter.

Der vorstehend unter II beschriebene Vorgang benötigt einen Bremshebelweg, der in dem üblichen und zulässigen "Spiel" der Bremse liegt. Falls das Fahrzeug bei einer derart leichten Bremsung zum Stehen kommen sollte, verhindert das geschlossene Rückschlagventil 29 ein ungewolltes Rückwärtsfahren des Fahrzeuges.

III

Starke Verzögerung

Zunächst wird das Fahrzeug gemäß II gebremst. Reicht die dabei erzeugte Verzögerung nicht aus, so wird das Bremspedal 19 weiter durchgetreten. Das setzt allerdings voraus, daß die äußerste Stellung der Kolbenstange des Stellzylinders 15 in Richtung Plus überfahren werden muß. Das ermöglicht die Druckfeder 20, die den Überfahrweg aufnimmt.

Sobald das Bremspedal 19 die äußerste Stellung des Hauptdruckerzeugers 57 überfährt, wird die Betätigung des
Hauptbremszylinders 18 eingeleitet, welcher die Betriebsbremse des Fahrzeuges betätigt, weil dieser nicht weiter
überfahren werden kann. Auf diese Weise wird das Fahrzeug
in konventioneller Weise zusätzlich abgebremst, weil, wie
oben beschrieben, die Pumpe ihrerseits in den Speicher 9
fördert. Es ergibt sich dann eine Kombination der Betriebsbremse mit der Bremswirkung der Pumpe, die bis
zur Vollbremsung des Fahrzeuges gehen kann.

Wird danach das Bremspedal 19 losgelassen, so wird das
Bremsgestänge durch die Rückstellfeder 21 und den Kolben
des Hauptbremszylinders 18 mit Hilfe der Rückstellfeder
22 gegen den Anschlag 36 und damit in Ausgangsstellung
gebracht. Das Fahrzeug ist somit unabhängig von seinen
Bremsen.

IV

Leichtes Beschleunigen

Nach einem Bremsvorgang ist der Speicher 9 mehr oder
weniger gefüllt. Die Beschleunigung des Fahrzeuges wird
mit dem Gaspedal 23 ausgelöst. Der Schließer 32 im elektrischen Kreis 55 wird bei der Betätigung des Gaspedals 23
geschlossen, wodurch das elektrisch betätigte Rückschlagventil 29 entsperrt wird. Die dann geöffnete Verbindung
von der Hochdruckseite 50 zur Niederdruckseite 53 gestattet den Betrieb der Pumpe 8 als Antriebsmaschine.

Gleichzeitig wird mit dem Gaspedal 23 der Stellzylinder 24 betätigt, der als Hilfsdruckerzeuger dient. Er verstellt den Kolben 16 im Hauptdruckerzeuger, so daß dieser über seine als Stößel wirkende Kolbenstange auf den Hauptkolben 17 einwirkt und diesen so verstellt, daß die bisher als Hydropumpe wirkende Einheit 8 auf ein Schluckvolumen eingestellt wird, das vom hydraulischen Speicher 9 geliefert wird und die Pumpe als Hydraulikmotor antreibt. Die Auslenkung des Hauptkolbens 17 führt dazu, daß die Druckfeder 20 zusammengefahren wird. Die nunmehr als Motor wirkende Pumpe 8 treibt über die Welle 7 das Verbindungsgetriebe 6 die Kardanwelle 4 und das Differential 5 die Fahrzeugräder an, wobei die vorgegebene Drehrichtung eingehalten wird. In der hydraulischen Schaltung weist die Niederdruckseite 53 ein kleineres Volumen als die Hochdruckseite auf. Das beruht auf der Konstruktion des Druckspeichers 9. Die Volumina werden durch das Ausgleichsgefäß 33 kompensiert. Das geschieht so lange, bis der Speicher 9 leer ist.

Wenn sich das Fahrzeug weiterbewegt, wird über das Verbindungsgetriebe 6 und die Welle 7 die Pumpe 8 ihrerseits angetrieben und fördert nunmehr Drucköl aus der Hochdruckseite 50 in die Niederdruckseite 53. Deswegen ist eine Druckwaage 14 an die Hochdruckseite 50 angeschlossen. Der Druckabfall bedingt eine Auslenkung des in der Nullstellung befindlichen Waagekolbens, die die Pumpe 8 umsteuert, d.h. auf Schluckvolumen Null bringt. Wirkt die Pumpe 8 als Hydromotor, so ist die Nullstellung überfahren und dadurch die Druckwaage 14 unwirksam.

Im Ergebnis fährt das Fahrzeug von der gespeicherten Energie unbeeinflußt weiter.

V

## Weitere Beschleunigung

Wenn die Beschleunigung, wie oben unter IV beschrieben, abgelaufen ist und soll weiter beschleunigt werden, so muß das Gaspedal 23 weiter durchgetreten werden. In der äußersten Stellung des Stellzylinders 24 kann der Kolben mit der Druckfeder 25 überfahren werden. Erst dann wird das Gasgestänge 28 betätigt.

Damit beschleunigt die Brennkraftmaschine in herkömmlicher Weise das Triebwerk. Soll der Beschleunigungsvorgang beendet werden, so wird das Gaspedal 23 losgelassen und mit der Rückstellfeder 26 gegen den Anschlag 37 geführt; die Rückstellfeder 27 nimmt ihrerseits das Gasgestänge 28 in die Ausgangsstellung zurück. Das hat außerdem zur Folge, daß der Hilfsdruckerzeuger 24 entlastet und damit auch der Kolben 16 im Hauptdruckerzeuger in die Ausgangsstellung zurückverstellt wird.

Wenn der Druckspeicher 9 nicht entleert ist, wird die Beschleunigung durch die sich dann entspannende Druckfeder 20 beendet, indem diese den Hilfsdruckerzeuger 17 und infolge davon den Hydraulikmotor 8 auf Null stellt. Ist der Speicher 9 jedoch entleert, so hat die Nullstellung der Druckwaage 14 bereits den Hydromotor 8 und die Stellzylinder 15 und 17 in die Ausgangsstellung verstellt. Dann fährt das Fahrzeug ohne Energie aus dem Speicher unbeeinflußt weiter.

Über die jeweiligen Druckverhältnisse im Speicher 9 wird der Fahrer durch das Manometer 52 informiert.

## VI

### Stark beschleunigen

Nach einem Bremsvorgang ist der Speicher 9 mehr oder weniger stark gefüllt.

Soll stark beschleunigt werden, wird das Gaspedal in einem Zuge so weit durchgetreten, daß sowohl die gespeicherte Energie über den Hydromotor 8 als auch über das dann betätigte Gasgestänge 28 von der Brennkraftmaschine 1 abgerufen wird. Beide Energien addieren sich, so daß eine erhöhte Anfahrleistung abgerufen werden kann.

## VII

### Rückwärtsfahren

Wird der Rückwärtsgang im Getriebe 2 eingelegt, so schaltet der elektrische Zweig 55 der Steuerung nicht nur die Rückfahrleuchte ein, sondern über den Schalter 31 auch das Rückschlagventil 29, das dann für beide Durchflußrichtungen geöffnet ist.und verhindert gleichzeitig durch Sperren eines Wegeventiles 40 eine Entleerung des Speichers 9 und unterbricht durch Betätigung des Öffners 41 den Stromkreis 55 vor dem Wegeventil 10, welches damit auf freien Durchgang gestellt wird. Die Förderung der Hydropumpe 8 bleibt ohne Auswirkungen, da über die Rückschlagventile 29 und 13 bzw. Rückschlagventil 11, Wegeventil 10, Drossel 39 und Rückschlagventil 29 bei der anderen Förderrichtung leidglich Drucköl im Kreis gepumpt wird.

## VIII

### Ende der Fahrt

Soll das Fahrzeug geparkt werden, so wird die Zündung ausgeschaltet. Das elektrisch betätigte Kurschlußventil 10 wird umgesteuert und schaltet auf freien Durchgang. Noch vorhandener Druck gleicht sich in der hydraulischen Schaltung über die einstellbare Drossel 39 langsam aus, so daß ein Druckschlag vermieden wird. Die Anlage ist dann wirkungslos. Beim Starten wird sie automatisch wieder betriebsbereit gemacht.

<div align="center">

IX

<u>Sicherungen</u>

</div>

Zur Vermeidung der Gefahr des Überfüllens des Speichers 9 wird der Überdruck über das Druckbegrenzungsventil 12 und zusätzlich über die hydraulisch entsperrbare einstellbare Rückschlagsicherung 13 auf die Niederdruckseite umgesteuert. Das Rückschlagventil 11 trennt Hoch- und Niederdruckseite.

Die Entlüftungsmöglichkeiten 34 und die Entleerung 35 sind für die Inbetriebnahme und die Wartung vorgesehen. Der eingebaute Filter 30 mit seiner Sicherung durch zwei Rückschlagventile 38 bewirkt eine erhöhte Lebensdauer der Anlage.

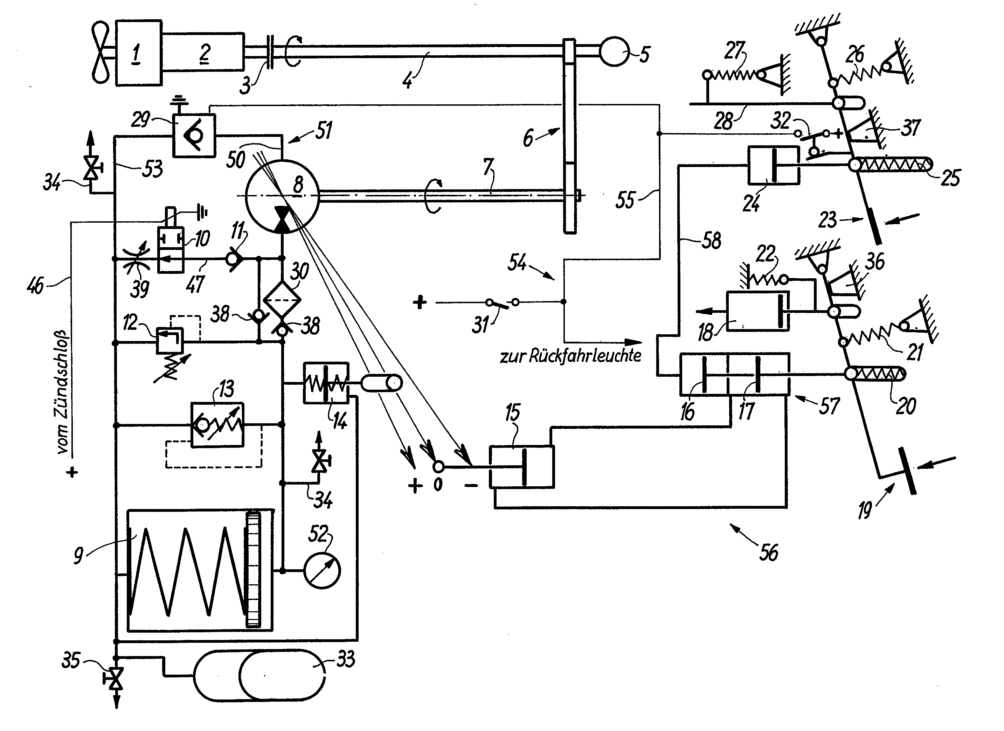

Patentansprüche:

1. Triebwerk, insbesondere für Kraftfahrzeuge, welche einen vorzugsweise mit einem Getriebe versehenen Antrieb, in dem der Motor mit einer Drehzahlsteuerung bzw. -regelung versehen ist und eine Betriebsbremse aufweist, die vorzugsweise auf die von dem Triebwerk angetriebenen Massen wirkt , g e k e n n z e i c h n e t   d u r c h einen hydrostatischen Hilfsantrieb mit einem auf Pumpen umschaltbaren hydraulischen Motor (8), einem Druckspeicher (9), auf den die Pumpe (8) arbeitet und der den hydraulischen Motor (8) speist und einer hydraulischen Schaltung (51), welche die Pumpe bzw. den Motor (8) mit dem Druckspeicher (9) verbindet, ein Verbindungsgetriebe (6) von dem hydrostatischen Hilfsantrieb zum Maschinentriebwerk, sowie eine Steuerung (54), die die Betriebsbremse (19) und die Drehzahlsteuerung bzw. -regelung (23) des Maschinenantriebes (1, 2) mit der Pumpenumschaltung (15) der hydraulischen Schaltung (51) verbindet.

2. Triebwerk nach Anspruch 1 , g e k e n n z e i c h n e t d u r c h eine lösbare Kupplung (3) zwischen dem Maschinenhauptantrieb (1, 2) und dem Verbindungsgetriebe (6).

3. Triebwerk nach einem der Ansprüche 1 oder 2 , d a - d u r c h   g e k e n n z e i c h n e t , daß die lösbare Kupplung (3) als Freilauf oder als hydrodynamische Kupplung (Drehmomentenwandler) ausgebildet ist.

4. Triebwerk nach einem der Ansprüche 1 bis 3,
   d a d u r c h     g e k e n n z e i c h n e t ,
   daß das Verbindungsgetriebe (6) als Ketten-, Riemen-
   oder Rädergetriebe ausgebil det ist.

5. Triebwerk nach einem der Ansprüche 1 bis 4 ,
   d a d u r c h     g e k e n n z e i c h n e t ,
   daß die hydraulische Schaltung eine die Pumpe (8)
   mit dem Druckspeicher (9) verbindende Hochdruckseite
   (50),eine  die Pumpe (8) speisende Niederdruckseite
   (53), sowie  eine Verbindungsleitung aufweist, in
   der ein Überdruckventil (11), ein bei eingeschaltetem Hauptantrieb (1, 2) offenes Wegeventil (10),
   sowie eine Drossel (39) in Richtung abnehmenden
   Druckes hintereinandergeschaltet sind.

6. Einrichtung nach einem der Ansprüche 1 bis 5,
   d a d u r c h     g e k e n n z e i c h n e t ,
   daß die Steuerung (54) einen hydraulischen Zweig
   (56) aufweist,  in dem ein mit der Betriebsbremse
   (19) gesteuerter Hauptdruckerzeuger (57), ein von
   der Drehzahlsteuerung- bzw. -regelung gesteuerter
   Hilfsdruckerzeuger (24) für einen auf dem Hauptdruckerzeuger (57) abgestützten Stellkolben (16)
   und wenigstens ein Stellmotor (15) zur Umsteuerung
   der Pumpe (8) angeordnet sind.

7. Triebwerk nach einem der Ansprüche 1 bis 6,
   d a d u r c h     g e k e n n z e i c h n e t ,
   daß die Steuerung (54) einen elektrischen Zweig
   (55) aufweist, in den ein mit der Drehzahlsteuerung-
   bzw. -regelung steuerbarer Schalter (32) für ein

- 3 -    0075035

elektrisch steuerbares Rückschlagventil (29) angeordnet ist, das in der hydraulischen Schaltung (51) eine Verbindungsleitung von der Hochdruckseite (50) zur Niederdruckseite (53) steuert.

8. Triebwerk nach einem der Ansprüche 1 bis 7, g e k e n n z e i c h n e t   d u r c h Druckfedern (20, 25) zum Überlaufen der Endstellungen der Haupt- und Hilfsdruckerzeuger (57, 24) mit der Betriebsbremse (19) bzw. der Drehzahlsteuerung- bzw. -regelung (23).

9. Triebwerk nach einem der Ansprüche 1 bis 8, g e k e n n z e i c h n e t   d u r c h ein Anfangsspiel der Betriebsbremse (19) bzw. der Drehzahlsteuerung- bzw. -regelung (23) vor der Betätigung eines Hauptbremszylinders (18) bzw. eines Gestänges (28).

10. Triebwerk nach einem der Ansprüche 1 bis 9 , g e k e n n z e i c h n e t   d u r c h eine Druckwaage (14) zur Umsteuerung der Pumpe (8) in die Nullage.

26

zur Rückfahrleuchte

vom Zündschloß

0075035

A3c805

**Europäisches Patentamt**

# EUROPÄISCHER RECHERCHENBERICHT

0075035

Nummer der Anmeldung

EP  81 10 7440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-2 827 763  (GOVAN) <br> * Spalten 2-7; Figur 4 * | 1,5 | B 60 T    1/10 |
| | --- | | |
| X | DE-A-2 551 580  (M.A.N.) <br> * Seiten 6,7; Figuren * | 1 | |
| | --- | | |
| X | GB-A-2 019 537  (FIAT) <br> * Seiten 1-3; Figuren * | 1,2,4 | |
| | ----- | | |

### RECHERCHIERTE SACHGEBIETE (Int. Cl. 3)

B 60 T    1/00
B 60 K    9/00
F 16 D   61/00

Der vorliegende Recherchenbericht wurde für alle Patentansprüche erstellt.

| Recherchenort | Abschlußdatum der Recherche | Prüfer |
|---|---|---|
| DEN HAAG | 17-05-1982 | FLORES E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82